# EUROPEAN PATENT SPECIFICATION

(11) **EP 3 995 058 B1**
(45) Date of publication and mention of the grant of the patent: **27.09.2023**
(21) Application number: 21203300.5
(22) Date of filing: 18.10.2021
(51) Int. Cl.: A47J 47/02

(54) **HERMETICALLY SEALED CONTAINER**
HERMETISCH VERSIEGELTE BEHÄLTER
RÉCIPIENT FERMÉ HERMÉTIQUEMENT

(30) Priority: 09.11.2020 IT 202000026741; 04.12.2020 IT 202000029903
(43) Date of publication of application: 11.05.2022
(73) Proprietor: Adamo S.r.l., 60022 Castelfidardo (AN) (IT)
(72) Inventor: ADAMO, Henry, 60022 CASTELFIDARDO (AN) (IT)
(74) Representative: Baldi, Claudio

(56) References cited:
- DE-U1- 29 714 678
- KR-A- 20090 058 978
- KR-A- 20140 076 018
- US-A1- 2014 299 004
- US-B1- 9 469 449

## Description

The present patent application for industrial invention relates to a hermetically sealed container.

The hermetically sealed containers that are known on the market do not let air enter or escape from the container, ensuring hygiene and safety against external contamination.

These containers can be made in various sizes and shapes, and they generally comprise:
- a container comprising a bottom wall, at least one side wall, an inner compartment defined by said bottom wall and by said at least one side wall, and a rim formed on the end of the side wall;
- a lid suitably configured be disposed in a non-operating position, wherein said lid does not close the inner compartment of the container, and in an operating position, wherein said lid is suitable for abutting against the rim of the container in such a way that the lid closes the container;
- a lip seal, pressed between said lid and said container to ensure the hermetical seal of the container (C).

Said lid and said container are usually made of a plastic material.

In a first type of containers according to the prior art, the lid of the container usually comprises one or more tabs that protrude externally from the lid and allow a user to hold them and pull the lid upwards so as to easily detach the lid from the container main body. More precisely, in order to detach the lid from the container, the user holds the container with one hand, grabs the tab with the other hand and pulls the lid away, overcoming the resistance offered by the lip seal.

On the other hand, according to a second type of containers of the prior art, the lid is provided with flaps that are rotatably coupled to the perimeter of the lid, each one of said flap being provided with interlocking coupling means suitable for coupling with corresponding interlocking means obtained on an outer face of the side wall of the container.

While these flaps allow the lid to be firmly locked to the container, such a solution is impaired by some drawbacks.

In particular, while it ensures the solid coupling between the lid and the container, on the other hand this second type of containers according to the prior art is difficult to be realized and, moreover, it is not easy to be used by a user. In fact, every time the lid is to be applied or extracted to/from the container it is always necessary to move the flaps in such a way to lock/unlock them to/from the container.

Moreover, the two types of containers according to the prior art are impaired by the fact that they have elements that protrude outside the lid and therefore strongly affect the aesthetics of the container when it is closed by the lid. These protruding elements can also offer points to grip to objects that are contained in a bag or in a sack together with the container, which can cause the accidental opening of the container with consequent leakage of the contents stored inside the container.

KR20140076018A discloses a vacuum food container. The container comprises a container main body and a lid. The container also comprises an airtight packing fixated to the edge of the top of the container main body. The container also comprises two opposite levers that are hinged to the lid in such a way that each lever comprises a holding portion suitable for being held and actuated by a user and an operative portion suitable for abutting against a flange of the container main body, which protrudes externally with respect to the top edge of the container main body. Therefore, by operating the holding portion, the operative portion strikes against the outer flange of the container in such a way that the lid lifts up and separates from the container according to the principle of levers.

In the container described in KR20140076018A the holding portion must necessarily protrude from the lid in such a way as to allow a user to have the necessary space to grab it in such a way to move the control lever.

Even if the aforementioned container is easy to open, such a container is impaired by several drawbacks.

First of all, the fact that the holding portion protrudes from the lid makes the portion of the handle subject to be intercepted by objects placed in a bag, such as strings, ropes and the like, causing its activation and the consequent accidental opening of the container.

Moreover, according to the principle of levers, the higher the length of the holding portion of the lever, the lower the force to be applied on it in order to move the lever and detach the lid from the container below will be. In the container of document KR20140076018A the holding portion must be of limited length since otherwise it would protrude excessively from the lid, making the lid extremely bulky and subjecting the holding portion to the risk of being intercepted by external elements that may cause its actuation. The constraint of length of the holding portion requires the user to apply a considerable physical effort in order to detach the lid from the container.

Moreover, the lid of the container does not cooperate with all types of container main body, because the container main body must be provided with said perimeter flange whereon the two levers act. Needless to say, a flanged container main body has a larger volume than a flange-less container main body and it is also less aesthetically pleasing than a flange-less container.

Another drawback of the container described in KR20140076018A is that the levers do not allow a user to see visually and immediately whether the container is closed properly or not.

Another hermetically sealed container according to the prior art is disclosed in US2014/299004A1.

The present invention has been devised from the careful observation of the aforementioned drawbacks in order to provide a solution to these problems.

Otherwise said, the main purpose of the present invention is to devise a container that is easy to lift and detach from a container main body by using only one hand and without the application of excessive forces.

A further purpose of the present invention is to devise a container wherein the lid is devoid of protruding elements so that the container has a clean and pleasing design and is not subject to the aforementioned accidental openings.

Another purpose is to devise a container wherein the lid visually and immediately allows a user to see whether the container is properly closed or not.

These purposes are achieved in accordance with the invention having the characteristics listed in the appended independent claim 1.

Advantageous embodiments appear from the dependent claims.

The container according to the invention is defined by claim 1.

For the sake of clarity, the description of the container according to the invention continues with reference to the appended drawings, which only have an illustrative and non-limiting value, wherein:
Fig. 1 and Fig. 2 are two side views of a container according to the invention, in said Fig. 1 and in said Fig. 2 the lid is disposed on the container main body and the control lever is respectively disposed in opening position and in closing position;
Fig. 3 is a side view of the container according to the invention with the lid and the container main body in disassembled condition;
Fig. 4 is an exploded view of the container of Fig. 3;
Fig. 5 is a sectional view of the container of Fig. 1, taken along a vertical plane that passes through the command lever;
Fig. 6 is a sectional view of the container of Fig. 2, taken along a vertical plane that passes through the command lever;
Fig. 7 is a top view of the plurality of lids with different shapes;
Figs. 8 and 9 are two sectional views of an alternative embodiment of the container sectioned along a vertical plane that passes through the command lever; in said Fig. 8 the lever is in opening position, whereas in said Fig. 9 the lever is in closing position;
Figs. 10 and 11 are two side views of the container and of a hand of a user that opens the container.

With reference to the appended figures, a container according to the invention is described, which is generally indicated with the reference letter (C).

The hermetic container (C) comprises a container main body (1) comprising a bottom wall (10), a side wall (11), and an inner compartment (V) defined by the bottom wall (10) and by the side wall (11).

The container main body (1) comprises an access opening (B) above the interior compartment (V) defined by a rim (11a) of the container main body.

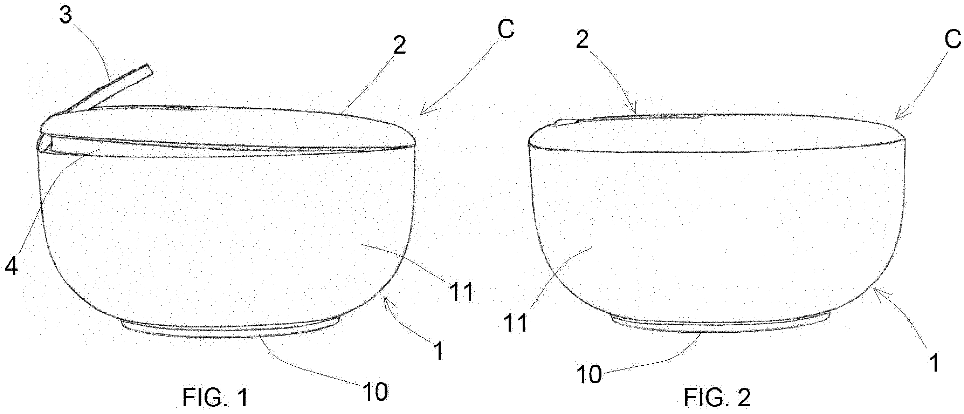

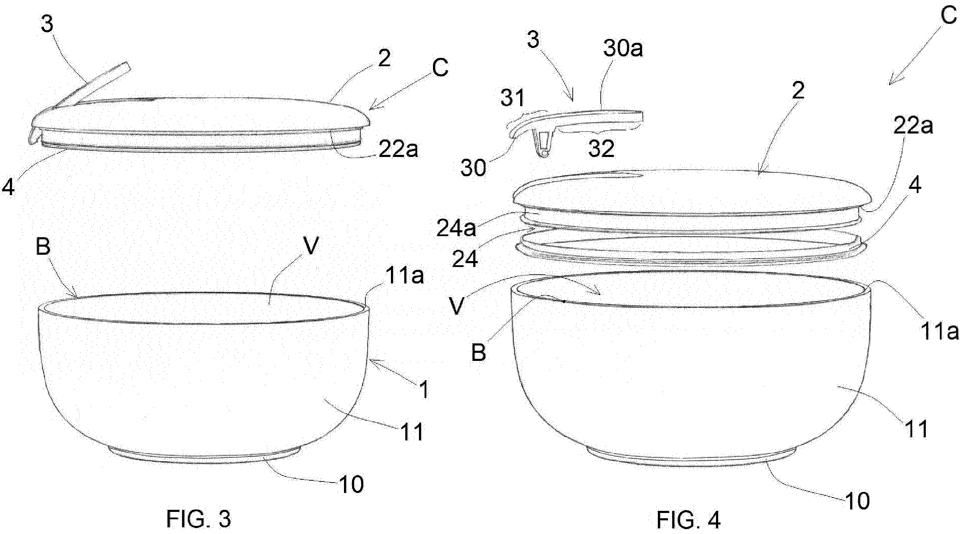

The lid (2) is suitably configured to be in an operating position (shown in Figs. 1 and 2), wherein said lid (2) rests on the rim (11a) of the container main body (1), and in a non-operating position (shown in Fig. 3), wherein the lid (2) is detached and separated from the container main body (1).

Preferably, the area of said lid (2) is lower than or equal to the area of the container main body (1).

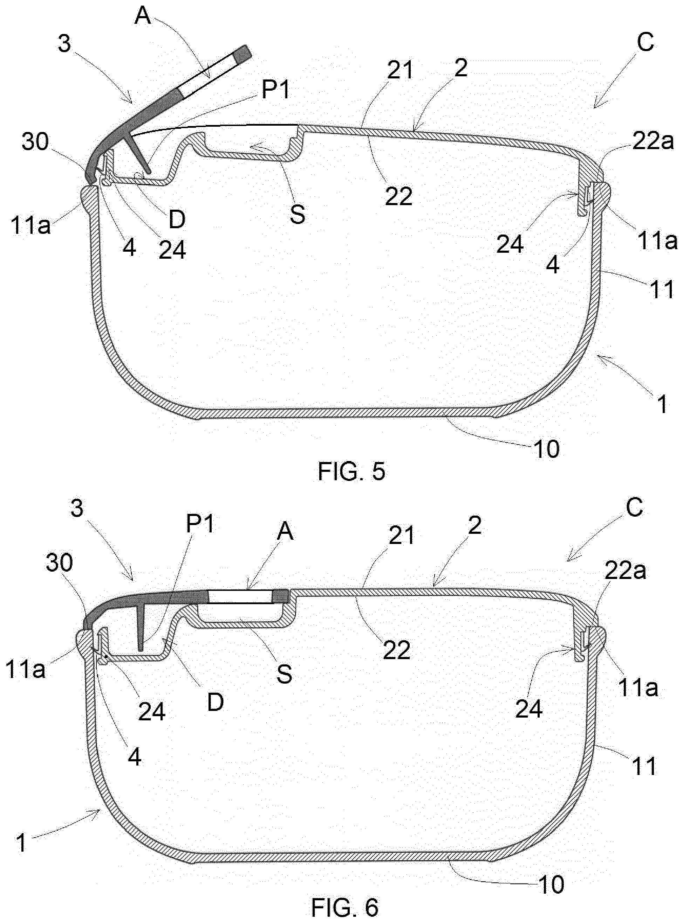

With particular reference to Figs. 5 and 6, the lid (2) comprises an inner face (22), which is directed towards the container main body (1) when the lid (2) is in said operating position, and an outer face (21), which is directed in the opposite direction with respect to said inner face (22), that is to say outwards.

Again with reference to Figs. 5 and 6, said lid (2) comprises a stop surface (22a) that is formed on the inner face (22) and abuts against the rim (11a) of the container main body (1) so that the lid can hermetically close the container main body (1).

With particular reference to Fig. 4, the container (C) also comprises a lip seal (4) that is compressed between the lid (2) and the container main body (1) to ensure the hermetic seal of the container (C).

Preferably, the lip seal (4) is fixed to the lid (2).

With particular reference to Fig. 4, the lid (2) comprises an annular edge (24) that protrudes inferiorly from the inner face (22) of the lid (2) and comprises an outer groove (24a) that extends for the entire length of the annular edge (24).

The lip seal (4) is accommodated in said outer groove (24a).

The container (C) comprises a control lever (3) hinged to the lid (2). In particular, the container (C) comprises only one control lever (3).

The control lever (3) is hinged to the lid (2) so as to define a holding portion (32) suitable for being operated by the user and an operating portion (31) having an abutment surface (30) suitable for abutting against said rim (11a) of the container main body (1) in order to lift a portion of the stop surface (22a) of the lid from the rim (11a) of the container main body (1).

By operating the holding portion (32), the control lever (3) can be moved from a closing position (see Figs. 2 and 6), wherein the stop surface (22a) of the lid abuts against the rim (11a) of the container main body, to an opening position (see Fig. 1 and 5), wherein the stop surface (22a) of the lid is separated from the rim (11a) of the container main body (1).

Otherwise said, when the control lever (3) is positioned in said opening position, the lid (2) is inclined with respect to a plane whereon the rim (11a) of the container main body (1) lies so that the stop surface (22a) rests on the rim (11a) in correspondence with a point, whereas when the control lever (3) is positioned in said closing position, the lid (2) is parallel to the plane whereon the rim (11a) of the container main body (1) lies so that the stop surface (22a) completely rests in contact with the rim (11a) of the container main body (1).

Thus, when the control lever (3) is raised in order to be moved from the closing position to the opening position, the abutment surface (30) of the operating portion (31) of the control lever (3) abuts against the rim (11a) of the container main body (1) in such a way that the control lever (3) levers over the rim (11a) and lifts the lid (2).

By operating said control lever (3) upwards, a vertical force is applied which unlocks the closure of the lid (2) facilitating the opening of the lid from the planar hermetic position to the inclined position, allowing the entry of air inside the internal compartment (V) from a gap generated between the lid and the container main body.

It should be noted that the holding portion (32) can also be defined as the power arm of the control lever (3), whereas the operating portion (31) can be defined as the resistant arm of the control lever (3).

The lid (2) comprises a recessed seat (S, D) formed on the outer face (21) of the lid (2), which accommodates said control lever (3) in such a way that, when the control lever (3) is in closing position, the holding portion (32) of the control lever (3) is recessed into the recessed seat (S, D), preventing any accidental actuation.

The fact that the control lever (3) is recessed into the recessed seat (S, D) prevents strings, ropes or other elements from intercepting and actuating the control lever (3), causing the accidental opening of the container (C).

The control lever (3) comprises an outer face (30a) that is substantially flush with the outer face (21) of the lid (2) when the control lever (3) is in said closing position.

In this way, when the control lever (3) is in said closing position, and therefore the control lever (3) is completely lowered, the lid (2) does not have any steps, is aesthetically clean and is pleasing to the eye.

The fact that the control lever (3) is housed in the recessed seat (D, S) and the outer face (30a) of the control lever (3) is substantially flush with the outer face (21) of the lid (2) when the control lever (3) is in closing position, allows a user to visually see whether the container (C) is open or closed.

In fact, if the control lever (3) is slightly raised and therefore protrudes slightly from the upper face of the lid, this will indicate that the container (C) is open. On the other hand, if the control lever (3) is completely lowered and therefore does not protrude from the upper face of the lid, this will indicate that the container (C) is perfectly closed.

In view of the above, in addition to having a clean and pleasant design, the container (C) according to the invention is also extremely safe and reliable unlike the container of document KR20140076018A.

With particular reference to Fig. 4, the holding portion (32) is radially directed towards a central portion of the lid (2) so that it does not protrude externally from the lid (2). The operating portion (31) of the control lever (3) is radially directed towards the periphery of the lid (2).

Preferably, the abutment surface (30) of the control lever (3) is flush with the stop surface (22a) of the lid (2) when the operating lever (3) is in opening position.

The control lever (3) is hinged to the lid (2) at a pivoting point (P1) interposed between the two portions (31, 32) of the control lever (3). Said holding portion (32) has a greater length than the operating portion (31) so that the control lever (3) is a first-class lever of advantageous type.

An aperture (A) is provided on the holding portion (32) to allow the fingers of a user to pass through and grab the control lever (3).

In the preferred embodiment of the invention, said recessed seat (S, D) comprises two portions, namely a first portion (D) wherein the control lever (3) is hinged, and a second portion (S) disposed below the opening (A) of the holding portion (32) that allows a user to insert his or her fingers below the aperture (A) when the control lever (3) is in closing position.

So, starting from the position shown in Fig. 2, wherein the lid (2) is in operating position and the control lever (3) is in closing position, in order to gain access to the inner compartment (V) of the container main body (1), it is necessary for the user to grab the holding portion (32) of the control lever (3) and lift it upwardly in such a way that the abutment surface (30) of the operating portion (31) of the control lever (3) abuts and pushes the rim (11a) of the container main body (1) so that the lid (2) is lifted and is arranged substantially in an inclined position as shown in Fig. 1.

At this point, in order to separate the lid (2) from the container main body (1), it will be simply necessary to pull the lid (2) upwards, thus leaving free access to the internal compartment (V) of the container main body (1).

In order to close the container again, it will be simply necessary to place the control lever (3) in closing position and push the lid (2) against the rim (11a) of the container main body (1).

It should be noted that, although Figs. 1 to 6 show a container (C) comprising a container main body (1) with only one side wall (11) with a circular cross-section and a lid (2) with a circular shape, there is no reason why the container (C) cannot be made with a container main body (1) and a lid (2) of different shapes.

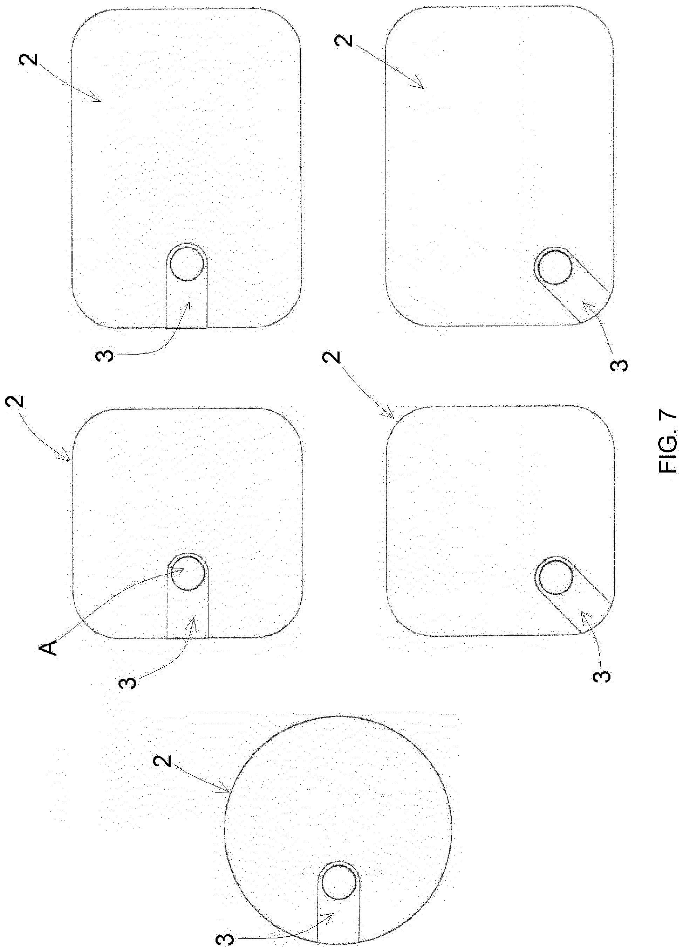

By way of example, the container main body (1) may comprise four side walls (11) with square or rectangular cross-section. Similarly, in order to mate with the container main body (1), the lid (2) will have to have a substantially identical shape to that of the container main body (1), and thus have a quadrangular shape. Fig. 7 illustrates the different shapes that the lid (2) can have.

With reference to the quadrangular shapes, the control lever (3) can be arranged indifferently on one side of the lid (2) or at a corner of the lid (2).

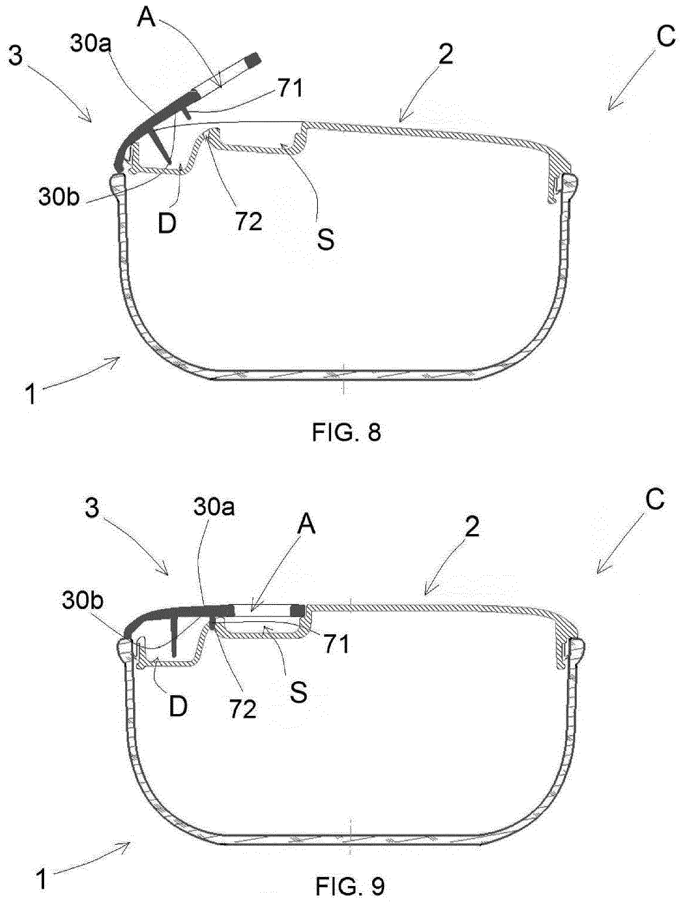

With reference to Figs. 8 and 9, a preferred embodiment of the lid (2) is shown according to the invention.

According to such an embodiment, a pin (71) is provided on an inner face (30b) of the control lever (3), opposite to the outer face (30a), and a through hole (72) is provided and on the lid (2) for the insertion of said pin (71).

During the movement of the control lever (3) between the closing and the opening position, the pin (71) engages and disengages in/from the through hole (72), blocking or releasing it.

Such a device considerably facilitates the opening of the container (C). In fact, when the control lever (3) is lifted, the pin slides out of the through hole (72), thus favoring the passage of air between the inside of the container (C) and the outside of the container (C), reducing the pressure difference between the inside and the outside.

Moreover, the provision of said pin (71) and of the through hole (72) makes it easier to close the container (C).

In fact, once the lid (2) has been placed over the container main body (1), by moving the control lever (3) from the opening position (shown in Fig. 8) to the closing position (shown in Fig. 9), the lid (2) is lowered, partially penetrating inside the container main body (1). The air volume quantity occupied by the portion of the lid (2) that penetrates inside the container main body (1) flows, at least partially, outside the container (C), crossing the through hole (72) before the through hole (72) is closed by the pin (71), thereby reducing the air pressure inside the closed container (C).

Firstly, such an arrangement reduces the thrust force that the user must apply to the control lever in order to close the container (C) and provides a hermetic closing. Moreover, such a decrease of the internal pressure in the container (C) reduces the probability of accidental opening of the container (C).

In fact, it is evident that the greater the pressure inside the closed container (C), the greater the radial stresses acting on the lid (2) and on the container main body (1), which tend to detach the two parts and consequently accidentally open the container (C), will be. Therefore, the reduction of the internal pressure inside the container (C) will decrease the detachment force that tends to detach the lid (2) and the container main body (1), increasing the reliability of the container (C) in closing position.

Moreover, the provision of the through hole (72) makes it possible to use the container (C) even inside a microwave oven, keeping the control lever (3) raised without having to extract the lid (2) completely.

More precisely, keeping the container (C) closed, the temperature will inevitably increase and accordingly the pressure will increase inside the container (C) when the food is heated. By removing the pin (71) from the through hole (72), the air can flow outside the container (C), thus keeping the inside and the outside of the container (C) at the same identical pressure. Furthermore, the provision of the lid (2) which covers the compartment of the container main body (1) prevents splashes of oils, sauces and other fluid foodstuffs, placed inside the container main body (1), from escaping from the container main body (1), soiling and ruining the internal walls of the microwave.

Preferably, the through hole (72) is obtained in an intermediate position between the first portion (D) and the second portion (S) of the recessed seat (S, D).

A seal may be inserted in the through hole (72) to further ensure that the through hole (72) is hermetically sealed when the through hole (72) is closed by the pin (71).

It must be noted that the hermetic closure of the container (C) can also take place without having to manually move the control lever (3) from its first position to its second position, simply by forcefully pushing the lid (2) on the container main body (1). In fact, during such a push, the abutment surface (30) will intercept the rim (11a), causing an automatic rotation of the control lever (3) from the opening position to the closing position, hermetically closing the container (C) and closing the through hole (72) by means of the pin (71).

It is also important to point out to the reader how the opening mode of the lid (2) is extremely similar to the opening of the traditional tin cans used for the preservation of tomato paste, tuna fish, legumes and the like, in which the top is provided with a ring that is first lifted and then pulled with such a force as to detach the lid from the can. Such a characteristic makes the use of the container (C) familiar to anyone who has ever used such tin cans.

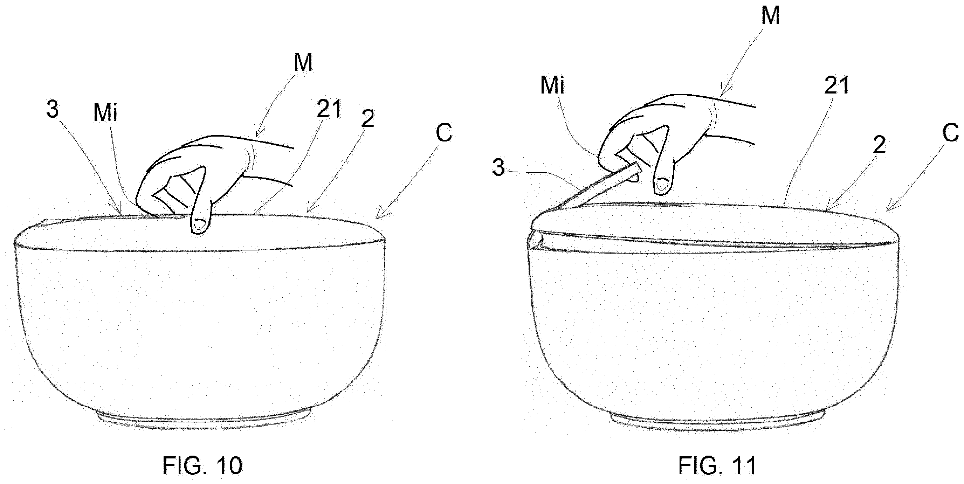

With reference to Figs. 10 and 11, an opening process of the container (C) according to the invention is illustrated.

With reference to Fig. 10, first the thumb, the middle finger, the ring finger and the little finger of the user's hand (M) are placed on the outer face (21) of the lid (2). Then the index finger (Mi) of the user's hand (M) is inserted inside the aperture of the holding portion (32) of the control lever (3) so as to grip the control lever (3).

Then, with reference to Fig. 11, the index finger (Mi) is moved upward so that the control lever (3) is raised and the abutment surface (30) abuts against the rim (11a) of the container main body (1) in order to detach the lid (2) from the container main body (1).

As a result of the foregoing description, the advantages of the present invention with respect to the prior art and with respect to the container of document KR20140076018A are now apparent.

In particular, the inventive idea of recessing the control lever (3) in the recessed housing (D, S) is quite advantageous.

Such a structural choice provides the following advantages:
- firstly, it avoids that the control lever is intercepted by other elements and therefore that the container opens accidentally;
- it makes it possible to design a control lever with a much longer holding portion than those of the container of document KR20140076018A without detriment to the aesthetic appearance of the container;
- the opening is easier to carry out because it can be done by using only one hand.

Numerous variations and detailed modifications can be made to the present embodiment of the invention, within the reach of a person skilled in the art, as long as they fall within the scope of the invention as expressed by the appended claims.

## Claims

1. Hermetically sealed container (C) comprising:
- a container main body (1) with a rim (11a);
- a lid (2) having an inner face (22) directed towards the container main body (1), an outer face (21) directed outwards, and a stop surface (22a) formed on the inner face (22) of the lid and suitable for abutting against said rim (11a) of the container main body (1), so that the lid (2) can hermetically close the container main body (1);
- a lip seal (4) compressed between the container main body (1) and the lid (2) to ensure that the container (C) is hermetically sealed; and
- a control lever (3) hinged to the lid (2) so as to define a holding portion (32) capable of being actuated by the user and an operating portion (31);
said lid (2) comprising a recessed seat (S, D) formed on the outer face (21) of the lid (2), which accommodates said control lever (3) in such a way that when the control lever (3) is in closing position, the holding portion (32) of the control lever (3) is recessed in the recessed seat (S, D) and does not protrude with respect to the lid (2), preventing any accidental actuations;
**characterized in that**
said control lever (3) has an abutment surface (30) capable of abutting against said rim (11a) of the container main body (1),
said control lever (3) being able to move, by operating the holding portion (32), from a closing position, wherein the stop surface (22a) of the lid (2) is abutting against the rim (11a) of the container main body (1), to an opening position, wherein the stop surface (22a) of the lid (2) is separated from the rim (11a) of the container main body (1);
said operating portion (31) of the control lever (3) being configured to lift a portion of the stop surface (22a) of the lid from the rim (11a) of the container main body (1).

2. The container (C) according to claim 1, wherein said container (C) comprises only one control lever (3) hinged to the lid (2).

3. The container (C) according to claim 1 or 2, wherein the holding portion (32) of the control lever (3) is directed radially toward a central portion of the lid (2) and wherein the operating portion (31) of the control lever (3) is directed radially toward the periphery of the lid (2).

4. The container (C) according to any one of the preceding claims, wherein the area of said lid (2) is lower than or equal to the area of the container main body (1).

5. The container (C) according to any one of the preceding claims, wherein said control lever (3) comprises an outer face (30a) that is substantially flush with the outer face (21) of the lid (2) when the control lever (3) is in said closing position.

6. The container (C) according to any one of the preceding claims, wherein said lip seal (4) is fixed to the lid (2).

7. The container (C) according to any one of the preceding claims, wherein said holding portion (32) comprises an aperture (A) suitably configured to allow for the insertion of the fingers of a user.

8. The container (C) according to any one of the preceding claims, wherein said recessed seat (D, S) comprises two portions, namely a first portion (D) wherein the control lever (3) is hinged, and a second portion (S) disposed below the aperture (A) of the holding portion (32).

9. The container (C) according to any one of the preceding claims, wherein said control lever (3) comprises an inner face (30b) directed towards the lid (2), from which a pin (71) protrudes; said lid (2) comprising a through hole (72) for inserting/extracting said pin (71) when the control lever (3) is moved between the opening position and the closing position.

10. The container (C) according to claim 9, when dependent on claim 8, wherein said through hole (72) is obtained in a position interposed between the first portion (D) and the second portion (S) of the recessed seat (D, S).

11. The container (C) according to any one of claims 6 to 9, comprising an annular edge (24) that protrudes inferiorly from the inner face (22) of the lid (2) and comprises an outer groove (24a) that extends for the entire length of the annular edge (24); said lip seal (4) being disposed in said outer groove (24a).

12. The container (C) according to any one of the preceding claims, wherein said control lever (3) is a first-class lever of advantageous type.

13. The container (C) according to any one of the preceding claims, wherein said abutment surface (30) of the operating portion (31) of the control lever (3) is flush with the stop surface (22a) of the lid (2) when the control lever (3) is in closing position.

## Patentansprüche

1. Hermetisch abgedichteter Behälter (C), umfassend:
- einen Behälterhauptkörper (1) mit einem Rand (11a);
- einen Deckel (2) mit einer Innenseite (22), die zu dem Behälterhauptkörper (1) gerichtet ist, einer Außenseite (21), die nach außen gerichtet ist, und einer Anschlagfläche (22a), die auf der Innenseite (22) des Deckels ausgebildet ist und dazu bestimmt ist, gegen den Rand (11a) des Behälterhauptkörpers (1) in Anschlag zu gehen, so dass der Deckel (2) den Behälterhauptkörper (1) hermetisch verschließen kann;
- eine Dichtlippe (4), die zwischen dem Behälterhauptkörper (1) und dem Deckel (2) zusammengepresst ist, um die hermetische Abdichtung des Behälters (C) zu gewährleisten; und
- einen Bedienhebel (3), der an dem Deckel (2) angeschlagen ist, um einen von dem Bediener betätigbaren Griffabschnitt (32) und einen Bedienabschnitt (31) zu definieren;
wobei der Deckel (2) einen eingelassenen Sitz (S, D) umfasst, der auf der Außenseite (21) des Deckels (2) ausgebildet ist, der den Bedienhebel (3) so aufnimmt, dass wenn der Bedienhebel (3) sich in der Schließposition befindet, der Griffabschnitt (32) des Bedienhebels (3) in dem eingelassenen Sitz (S, D) versenkt ist und nicht in Bezug auf den Deckel (2) vorsteht, wodurch ein unbeabsichtigtes Betätigen verhindert wird;
**dadurch gekennzeichnet, dass**
der Bedienhebel (3) eine Anschlagfläche (30) aufweist, die in der Lage ist, gegen den Rand (11a) des Behälterhauptkörpers (1) in Anschlag zu gehen,
wobei der Bedienhebel (3) in der Lage ist, durch Betätigen des Griffabschnitts (32) sich aus einer Schließposition, in der die Anschlagfläche (22a) des Deckels (2) gegen den Rand (11a) des Behälterhauptkörpers (1) in Anschlag steht, in eine Öffnungsposition zu bewegen, in der die Anschlagfläche (22a) des Deckels (2) von dem Rand (11a) des Behälterhauptkörpers (1) getrennt ist;
wobei der Bedienabschnitt (31) des Bedienhebels (3) konfiguriert ist, um einen Abschnitt der Anschlagfläche (22a) des Deckels vom Rand (11a) des Behälterhauptkörpers (1) anzuheben.

2. Behälter (C) nach Anspruch 1, wobei der Behälter (C) nur einen Bedienhebel (3) umfasst, der an dem Deckel (2) angeschlagen ist.

3. Behälter (C) nach Anspruch 1 oder 2, wobei der Griffabschnitt (32) des Bedienhebels (3) radial zu einem zentralen Abschnitt des Deckels (2) gerichtet ist und wobei der Bedienabschnitt (31) des Bedienhebels (3) radial zum Außenumfang des Deckels (2) gerichtet ist.

4. Behälter (C) nach einem der vorstehenden Ansprüche, wobei das Flächenmaß des Deckels (2) gleich oder kleiner als das Flächenmaß des Behälterhauptkörpers (1) ist.

5. Behälter (C) nach einem der vorstehenden Ansprüche, wobei der Bedienhebel (3) eine Außenseite (30a) umfasst, die im Wesentlichen bündig mit der Außenseite (21) des Deckels (2) abschließt, wenn der Bedienhebel (3) sich in der Schließposition befindet.

6. Behälter (C) nach einem der vorstehenden Ansprüche, wobei die Dichtlippe (4) an dem Deckel (2) befestigt ist.

7. Behälter (C) nach einem der vorstehenden Ansprüche, wobei der Griffabschnitt (32) eine Öffnung (A) umfasst, die so konfiguriert ist, dass sie das Einführen der Finger eines Benutzers erlaubt.

8. Behälter (C) nach einem der vorstehenden Ansprüche, wobei der eingelassene Sitz (D, S) zwei Abschnitte umfasst, und zwar einen ersten Abschnitt (D), in dem der Bedienhebel (3) angeschlagen ist, und einen zweiten Abschnitt (S), der unterhalb der Öffnung (A) des Griffabschnitts (32) angeordnet ist.

9. Behälter (C) nach einem der vorstehenden Ansprüche, wobei der Bedienhebel (3) eine Innenseite (30b) umfasst, die zu dem Deckel (2) gerichtet ist, aus dem ein Stift (71) vorsteht; wobei der Deckel (2) ein Durchgangsloch (72) zum Einstecken/Herausziehen des Stifts (71) umfasst, wenn der Bedienhebel (3) zwischen der Öffnungsposition und der Schließposition bewegt wird.

10. Behälter nach Anspruch 9, wenn abhängig von Anspruch 8, wobei das Durchgangsloch (72) in einer Position zwischen dem ersten Abschnitt (D) und dem zweiten Abschnitt (S) des eingelassenen Sitzes (D, S) erhalten ist.

11. Behälter (C) nach einem der Ansprüche 6 bis 9, umfassend einen ringförmigen Rand (24), der unterseitig aus der Innenseite (22) des Deckels (2) vorsteht und eine äußere Nut (24a) umfasst, die sich über die gesamte Länge des ringförmigen Randes (24) erstreckt; wobei die Dichtlippe (4) in der äußeren Nut (24a) angeordnet ist.

12. Behälter (C) nach einem der vorstehenden Ansprüche, wobei der Bedienhebel (3) ein Erste-Klasse-Hebel vom vorteilhaften Typ ist.

13. Behälter (C) nach einem der vorstehenden Ansprüche, wobei die Anschlagfläche (30) des Bedienabschnitts (31) des Bedienhebels (3) bündig mit der Anschlagfläche (22a) des Deckels (2) abschließt, wenn der Bedienhebel (3) sich in der Schließposition befindet.

## Revendications

1. Récipient (C) du type hermétiquement scellé comprenant :
- un récipient (1) ayant un bord d'extrémité (11a) ;
- un couvercle (2) ayant une face interne (22) orientée vers le récipient (1), une face externe (21) orientée vers l'externe et une surface de butée (22a) réalisée sur la face interne (22) du couvercle et destinée à être en butée contre ledit bord d'extrémité (11a) du récipient (1), de sorte que le couvercle (2) puisse hermétiquement fermer le récipient (1) ;
- une étanchéité à lèvre (4) écrasée entre le récipient (1) et le couvercle (2) pour assurer l'étanchéité hermétique du récipient (C) ; et
- un levier de commande (3) articulé au couvercle (2), de manière à définir une portion de poignée, (32) apte à être actionnée par l'utilisateur et une portion opérationnelle (31) ;
ledit couvercle (2) comprenant un emplacement creux (S, D) réalisé sur la face externe (21) du couvercle (2), dans lequel ledit levier de commande (3) est installé, de sorte que, lorsque le levier de commande (3) est en position fermée, la portion de poignée (32) du levier de commande (3) est en retrait dans l'emplacement creux (S, D) et ne déborde pas par rapport au couvercle (2) en empêchant ainsi toute activation accidentelle ;
**caractérisé en ce que**
ledit levier de commande (3) a une surface de butée (30) apte à aller en butée contre ledit bord d'extrémité (11a) du récipient (1),
ledit levier de commande (3) étant en mesure de se déplacer, en actionnant la portion opérationnelle (32), d'une position de fermeture, où la surface de butée (22°) du couvercle (2) est en butée contre le bord d'extrémité (11°) du récipient, à une position d'ouverture, où la surface de butée (22a) du couvercle (2) est éloignée du bord d'extrémité (11a) du récipient (1) ;
ladite portion opérationnelle (31) du levier de commande (3) étant configurée pour soulever une portion de la surface de butée (22a) du couvercle du bord d'extrémité (11) du récipient (1).

2. Récipient (C) selon la revendication 1, où ledit récipient (C) comprend un seul levier de commande (3) articulé au couvercle (2).

3. Récipient (C) selon la revendication 1 ou 2, où la portion de poignée (32) du levier de commande (3) est orientée radialement vers une partie centrale du couvercle (2) et où la portion opérationnelle (31) du levier de commande (3) est orientée radialement vers la périphérie du couvercle (2).

4. Récipient (C) selon l'une quelconque des revendications précédentes, où ledit couvercle (2) a un encombrement en plan mineur ou égal à l'encombrement en plan du récipient (1).

5. Récipient (C) selon l'une quelconque des revendications précédentes, où ledit levier de commande (3) comprend une face externe (30a) qui pratiquement est en aplomb avec la face externe (21) du couvercle (2) lorsque le levier de commande (3) est en position de fermeture.

6. Récipient (C) selon l'une quelconque des revendications précédentes, où ladite étanchéité à lèvre (4) est reliée au couvercle (2).

7. Récipient (C) selon l'une quelconque des revendications précédentes, où ladite portion de poignée (32) comprend une ouverture (A) façonnée de manière à permettre le passage des doigts d'un utilisateur.

8. Récipient (C) selon l'une quelconque des revendications précédentes, où ledit emplacement creux (D, S) comprend deux portions dont une première portion (D) en correspondance de laquelle le levier de commande (3) est articulé et une seconde portion (S) disposée au-dessous de l'ouverture (A) de la portion de poignée (32).

9. Récipient (C) selon l'une quelconque des revendications précédentes, où ledit levier de commande (3) comprend une face interne (30b), orientée vers le couvercle (2), de laquelle déborde un pivot (71) ; ledit couvercle (2) comprenant un trou passant (72) à l'intérieur duquel ledit pivot (71) est destiné à s'enclencher/déclencher lorsque le levier de commande (3) est déplacé entre la position d'ouverture et la position de fermeture.

10. Récipient (C) selon la revendication 9, lorsque dépendante de la revendication 8, où ledit trou passant (72) est réalisé dans une position interposée entre la première portion (D) et la seconde portion (S) de l'emplacement creux (D, S).

11. Récipient (C) selon l'une quelconque des revendications de 6 à 9, comprenant un rebord annulaire (24) qui déborde inférieurement de la face interne (22) du couvercle (2) et qui comprend une rainure externe (24a) qui se déploie sur toute la longueur du rebord annulaire (24) ; ladite étanchéité à lèvre (4) étant disposée dans ladite rainure externe (24a).

12. Récipient (C) selon l'une quelconque des revendications précédentes, où ledit levier de commande (3) est un levier de première catégorie du type avantageuse.

13. Récipient (C) selon l'une quelconque des revendications précédentes, où ladite surface de butée (30) de la portion opérationnelle (31) du levier de commande (3) est en aplomb avec la surface de butée (22a) du couvercle (2) lorsque le levier de commande (3) se trouve dans sa position de fermeture.
